Europäisches Patentamt

European Patent Office

Office européen des brevets

(19)

(11) Veröffentlichungsnummer: **0 227 634**

**B1**

(12) **EUROPÄISCHE PATENTSCHRIFT**

(45) Veröffentlichungstag der Patentschrift: 06.06.90

(21) Anmeldenummer: 86890330.3

(22) Anmeldetag: 27.11.86

(51) Int. Cl.⁵: **B 23 K 35/02, B 23 K 35/40**

(54) Schweisszusatzwerkstoff und Verfahren zur Herstellung desselben.

(30) Priorität: 03.12.85 DE 3542663

(43) Veröffentlichungstag der Anmeldung:
01.07.87 Patentblatt 87/27

(45) Bekanntmachung des Hinweises auf die
Patenterteilung:
06.06.90 Patentblatt 90/23

(84) Benannte Vertragsstaaten:
AT BE DE FR NL SE

(56) Entgegenhaltungen:
DE-A-2 244 304
FR-A-1 548 711
FR-A-1 548 712
FR-A-1 563 336
FR-A-2 271 898
GB-A- 991 381
US-A-2 888 740

PATENTS ABSTRACTS OF JAPAN, Band 4, Nr.
167 (M-42)649r, 19. November 1980; & JP-A-55
117 590 (MITSUBISHI KINZOKU K.K.) 09-09-1980

(73) Patentinhaber: BÖHLER Gesellschaft m.b.H.
Elisabethstrasse 12
A-1010 Wien (AT)

(72) Erfinder: Dören, Horst, Dipl.-Ing.
Frankenstrasse 51
D-5177 Titz-Rödingen (DE)

EP 0 227 634 B1

## Beschreibung

Die Erfindung bezieht sich auf einen Schweißzusatzwerkstoff, Schweißdraht, insbesondere auf eine selbstverzehrende Elektrode zum Schweißen, mit einer in sich geschlossenen metallischen Umhüllung aus Stahl, Eisen, Kobalt und/oder Nickel und mit einem Kern, welcher ein metallisches Pulver einer chemischen Zusammensetzung aufweist, und auf ein Verfahren zur Herstellung eines derartigen Schweißzusatzwerkstoffes.

Bei der Herstellung von metallischen Schweißzusatzwerkstoffen, also beispielsweise Schweißdrähten oder -elektroden, wird so vorgegangen, daß eine Metallschmelze erschmolzen, in eine Kokille gegossen und sodann erstarren gelassen wird, Dieser Stahlblock wird sodann warmverformt und- wie an sich bekannt - durch Ziehen in seinem Querschnitt so weit reduziert, daß ein entsprechender Draht bzw. stabförmige Elektrode erhalten wird. Ein derartiges Verfahren eignet sich insbesondere zur Herstellung von großen Mengen und von Legierungen, welche sich leicht warm- bzw. kaltverformen lassen. Ein Schweißdraht, der nach diesem Verfahren hergestellt ist, kann jedoch auf Grund der Seigerungen im Block unterschiedliche chemische Zusammensetzungen aufweisen, da ein Block- wie bekanntim Kern eine andere chemische Zusammensetzung aufweist als im Randbereich bzw. der Blockfuß wieder eine andere chemische Zusammensetzung aufweist als der Blockschopf. Um diesen Unterschieden der chemischen Zusammensetzung Rechnung zu tragen, müssen auch Teile des Blockes oder gegebenenfalls des bereits gezogenen Drahtes verworfen werden.

Bei der Herstellung von Elektroden, beispielsweise zum Auftragschweißen aus einer Kobalt-Basis-Legierung ist es bereits bekannt geworden, kleinere Losgrößen dadurch herzustellen, daß die Schmelze in Quarzglasröhrchen gesaugt wird, worauf die Schmelze in den Röhrchen erstarren gelassen wird, und das Quarzglas durch mechanische Einwirkung, z.B. Schlagen od. dgl. entfernt wird. Das Verfahren hat den Vorteil, daß eine genau definierte chemische Zusammensetzung der Elektrode erreichbar ist und weiters eine weitere Verformung nicht durchgeführt werden muß. Ein derartiges Verfahren ist jedoch besonders aufwendig, sodaß auch bereits vorgeschlagen wurde, derartige Legierungen im Horizontalstrangguß-Verfahren herzustellen, wobei der Nachteil besteht, daß entsprechende Einrichtungen, welche üblicherweise in einem Schweißdrahtbetrieb nicht vorhanden sind, erst erstellt werden müssen.

Die vorliegende Erfindung hat sich zur Aufgabe gestellt, einen Schweißzusatzwerkstoff zu schaffen, welcher eine einheitliche chemische Zusammensetzung aufweist, der auch in kleinen Losgrößen, biespielsweise 50 bis 100 kg, einfach hergestellt werden kann und welcher mit Verfahren und Vorrichtungen, welche in einem Schweißdrahtbetrieb üblich sind, hergestellt werden kann.

In der Schweißtechnik sind sogenannte Fülldrähte bekannt, das sind Schweißzusatzwerkstoffe, die eine äußere Umhüllung aufweisen, aus welcher das spätere Schweißgut gebildet wird, in welcher Umhüllung ein Schweißpulver angeordnet ist. Derartige Schweißpulver können auch gegebenenfalls noch zusätzliche metallische Komponenten enthalten. Bei der Herstellung derartiger Fülldrähte wird beispielsweise gemäß der DE-A-25 15 342 so vorgegangen, daß vorerst ein Rohr mit größerem Durchmesser mit dem Schweißpulver gefüllt wird, welches Rohr sodann stufenweise unter gleichzeitiger Kompression des mineralichen Schweißpulvers in seinem Querschnitt durch Ziehen reduziert wird. Bei einer derartigen Querschnittsverminderung kommt es zu einer Komprimierung des an sich porösen Pulvers und es kann das im Rohrinneren befindliche Gas, beispielsweise Luft, durch die Lockerstellen, welche durch das Pulver bedingt sind, entweichen.

Als duktile Fülldrahtelektrode, insbesondere für ein Auftragschweißen bzw. Aufpanzern von Ventilsitzen mit nicht verformbaren, korrosions-und verschleißfesten und dgl. Legierungen, wurde gemäß US-A-2 888 740 vorgeschlagen, in ein Rohr aus verformbarem Metall oder einer solchen Legierung ein Gemisch von pulverförmigen Metallen und Stoffen einzubringen und nachfolgend zu einem Draht zu verformen, wobei die gewünschte chemische Zusammensetzung der Schweiße durch die Legierungsanteile des Rohres und eine entsprechend abgestimmte Mischung von Metallpulvern und Stoffen beim Aufschweißen der Elektrode gebildet wird. Nachteilig dabei ist, daß Inhomogenitäten im Schweißgut auftreten können.

Aus der FR-A-1 548 711 ist bekannt geworden, insbesondere zur Verbesserung der Verformbarkeit des Fülldrahtes, beim Ziehen verdüstes Metallpulver mit einem Korndurchmesser von 0,002 bis 0,2 mal den Durchmesser des Elektrodendrahtes in der oder als Füllung zu verwenden. Mit derartigem Pulver kann eine erforderliche Dichte des Kernes meist nicht erreicht werden und eine solche Elektrode weist oftmals eine für eine Hochleistungsschweißung zu geringe elektrische Belastbarkeit auf.

Der erfindungsgemäße Schweißzusatzwerkstoff, Schweißdraht, insbesondere selbstverzehrende Elektrode zum Schweißen, mit einer in sich geschlossenen metallischen Umhüllung aus Stahl, Eisen, Kobalt und/oder Nickel und mit einem Kern, welcher ein metallisches Pulver einer chemischen Zusammensetzung aufweist, besteht im wesentlichen darin, daß der Kern (4), welcher von der metallischen Umhüllung (5) umgeben ist, mit einem gasverdüsten Pulver aus metallischen Partikelchen aufgebaut ist, die im wesentlichen sphärische und/oder sphäroide Gestalt aufweisen, deren Korngröße zwischen 3 µm und 300 µm beträgt und der Kern eine Dichte aufweist, welche 85 bis 95% des spezifischen Gewichtes der Legierung des Pulvers beträgt.

Für den Fachmann war es durchaus überraschend, einen Schweißzusatzwerkstoff derartig aufzubauen, daß die chemische Zusammensetzung des Schweißgutes im wesentlichen durch das im Kern vorliegende Pulver bestimmt werden kann, welches lediglich durch die metallische Umhüllung verdünnt wird. Die metallischen Partikelchen liegen hiebei aneinander an und sind so festgebacken, daß ein Ausrinnen od. dgl. des Schweißdrahtes sicher vermieden ist. Weiters kann durch das Aneinanderliegen der Partikelchen eine verbesserte elektrische Leitfähigkeit erzielt werden, insbesondere dann, wenn der spezifische elektrische Widerstand der Legierung des Pulvers geringer ist als jener der Umhüllung. Ungeachtet des Skin-Effektes ist zumindest im Abschmelzbereich eine entsprechende elektrische Leitfähigkeit und zwar des gesamten abschmelzenden Schweißgutes gegeben. Durch die sphärische Gestalt des Pulvers kann eine Streckreduzierung des Schweißzusatzwerkstoffes auf besonders einfache Weise durchgeführt werden, wobei eine Verdichtung durchgeführt wird und die im Inneren der Umhüllung vorhandene Luft noch entweichen kann. Die bevorzugte Korngröße beträgt zwischen 3 µm und 300 µm, wobei Pulver mit unterschiedlicher Korngrößenverteilung verwendet werden können. Weist der Kern eine Dichte auf, welche 85 bis 95% des spezifischen Gewichtes der Legierung des Pulvers beträgt, so ist ein besonders guter Kontakt zwischen den einzelnen Partikelchen gegeben, wobei gleichzeitig eine besonders homogene Verdichtung des Pulvers in der Umhüllung erreicht werden kann, da keine Lockerstellen, Lunker od.dgl. mehr auftreten.

Die Umhüllung kann zur Vermeidung von Korrosion und für die bessere elektrische Leitfähigkeit verkupfert sein.

Der erfindungsgemäße Schweißzusatzwerkstoff ist besonders für ein Pulver aus Legierungen, wie z.B. Nickel-oder Kobalt-Basis-Legierung geeignet, die besonders schwer einer Kalt-oder auch Warmverformung unterworfen werden können.

Inertgasverdüste Pulver eignen sich besonders für den erfindungsgemäßen Schweißzusatzwerkstoff, da sie einerseits an ihrer Oberfläche keine bzw. nur geringste Verunreinigungen aufweisen, und andererseits von besonders sphärischer Gestalt sind.

Um die Zusammensetzung des Schweißgutes durch das Pulver zu bestimmen, soll die größte Quererstreckung bei kreisrundem Querschnitt der Durchmesser des Kerns das 5-bis 10 fache der Wandstärke der Umhüllung betragen.

Das erfindungsgemäße Verfahren zur Herstellung eines Schweißzusatzwerkstoffes, wobei ein, insbesondere auf einer Haspel aufgewickeltes Rohr, vorzugsweise unter Rütteln der Haspel, mit einem Pulver gefüllt wird, worauf das Rohr mit Pulver durch Ziehen im Querschnitt reduziert wird, besteht im wesentlichen darin, daß das Rohr mit einem gasverdüsten, im wesentlichen sphärische und/oder sphäroide Gestalt aufweisenden Metallpulver mit einem Korndurchmesser von 3 µm bis 300 µm gefüllt wird, und durch Ziehen in Ziehvorrichtungen im Querschnitt reduziert und der Kern auf mindestens 85 bis 95% des spezifischen Gewichtes der Legierung des Metallpulvers verdichtet wird. Es war durchaus überraschend, daß ein derartiges Verfahren zur Herstellung eines Schweißzusatzwerkstoffes verwendet werden kann, welcher einen Kern aus einem Metallpulver aufweist, da nicht zu erwarten war, daß das Metallpulver bei der Reduzierung des Querschnittes nur einen geringeren Widerstand entgegensetzt und ein Entweichen des in der Umhüllung zwangsweise vorhandenen Gases gestattet.

Im folgenden wird die Erfindung anhand der Zeichnungen und der Beispiele näher erläutert.

Es zeigen Fig. 1 in schematischer Darstellung eine zur Herstellung der erfindungsgemäßen Schweißzusatzwerkstoffe geeignete Vorrichtung zum Reduzieren des Querschnitts, Fig. 2 stark vergrößert einen Schweißdraht und Fig. 3 die Korngrößenverteilung eines Metallpulvers.

Beispiel 1:

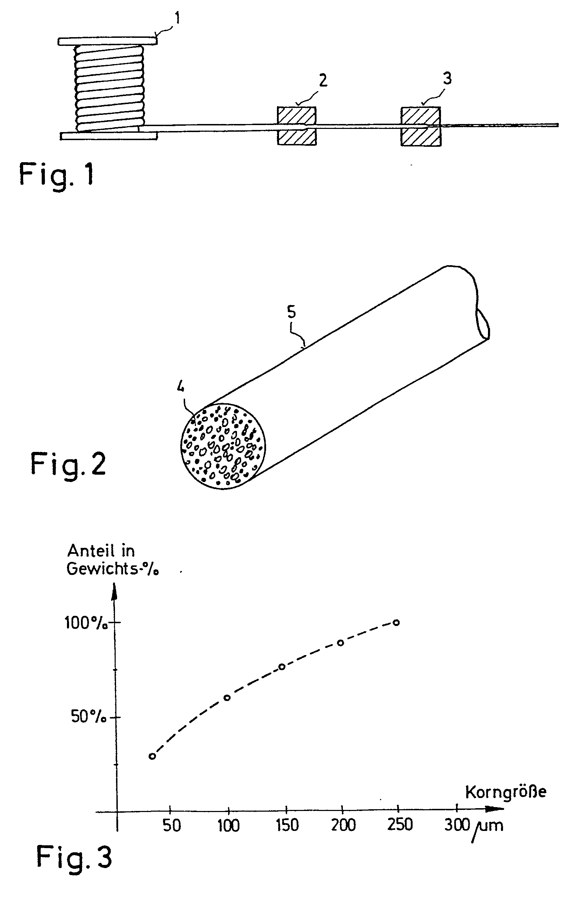

Eine Legierung folgender Zusammensetzung in Gew.-% Kohlenstoff 0,50, Chrom 26,0, Molybdän 5,5, Kobalt 60,0, Rest Eisen wurde in einem Elektroofen erschmolzen und wurde entsprechend dem Verfahren gemäß US-Patent 3 909 921 verdüst, wobei Argon als Inertgas verwendet wurde. Das so erhaltene Pulver wies eine Korngrößenverteilung gemäß Fig. 3 auf, wobei sämtliche Partikelchen kleiner als 250 Mikrometer waren und der Anteil kleiner als 30 m, 30 Gew.-% betrug. Das so erhaltene Pulver wurde in ein nahtloses Eisenrohr, welches auf einer Haspel aufgewickelt war, unter periodischem Rütteln der Haspel eingefüllt. Der Außendurchmesser des Rohres betrug 7,2 mm, wobei die Wandstärke des Rohres 1 mm betrug. Der so erhaltene gefüllte Draht wurde gemäß Fig. 1 von der Haspel 1 durch Ziehvorrichtungen 2 und 3 gezogen, wobei eine stufenweise Reduktion des Querschnittes von 7,2 mm auf 5,5 mm und auf 3 mm durchgeführt wurde. Der durch Ziehen erhaltene Draht ist in Fig. 2 dargestellt, wobei die sphärischen Partikelchen im Kern 4 in engem Kontakt aneinander in der Umhüllung 5 angeordnet sind. Der Durchmesser des Kernes, welcher durch die sphärischen bzw. sphäroiden Partikelchen gebildet wird, beträgt 2,2 mm, wohingegen die Wandstärke der metallischen Umhüllung, welche aus Weicheisen besteht, 0,4 mm beträgt. Der so erhaltene Schweißdraht wurde anschließend elektrolytisch verkupfert und es konnte eine Elektrode erhalten werden, die auf Basis einer Kobalt-Hart-Legierung ausgebildet ist, welche ausgezeichnete Warmhärte-und gute Zähigkeitseigenschaften bei hoher Thermoschockbeständigkeit aufweist, wie sie üblicherweise nur durch gegossene Kernstäbe erreichbar war. Das Schweißverhalten dieser Elektrode unterschied sich in keiner Form von den üblichen bekannten Stabelektroden.

**Beispiel 2:**

Es wurde eine Legierung folgender Zusammensetzung in Gew.-% Kohlenstoff 1,15, Silizium 0,6, Mangan 0,5, Chrom 27,5, Wolfram 4,7, Eisen 5 und Rest Kobalt gemäß Beispiel 1 versprüht, wobei die maximale Korngröße 300 Mikrometer betrug. In der in Fig. 1 schematisch dargestellten Vorrichtung wurde das mit diesem Pulver gefüllte Nickel-Eisen-Rohr mit einem Durchmesser von 5,5 mm und einer Wandstärke von 1 mm zweimal durch Ziehen in seinem Durchmesser auf 1,6 mm reduziert, wobei die Wandstärke des Rohres auf 0,3 mm abgesenkt werden konnte. Der so erhaltene Schweißdraht war hervorragend zur Aufpanzerung für Ventilsitze geeignet.

Aus dem Durchmesser der gemäß Beispiel 1 und Beispiel 2 erhaltenen Elektroden sowie der Wandstärke der äußeren Umhüllung und dem Volumsgewicht der Elektrode errechnete sich eine Verdichtung des Pulvers jeweils auf eine Größe, die 90% (Beispiel 1) bzw. 92% (Beispiel 2) des spezifischen Gewichtes der Legierung ergab.

**Beispiel 3:**

Ein Metallpulver aus Stahl mit folgender Zusammensetzung in Gew.-% Kohlenstoff 1,18, Silizium 0,75, Mangan 29,75, Chrom 1,09, Nickel 7,52 und Rest Eisen wurde hergestellt. Die maximale Korngröße betrug wieder 300 Mikrometer. Dieses Pulver wurde in ein unlegiertes Stahlrohr gefüllt und gemäß Fig. 1 von 7,2 mm an 3 mm gezogen. Es ergaben sich praktisch die gleichen Wandstärkenverhältnisse wie in Beispiel 1. Der so erhaltene verkupferte Schweißdraht ließ sich hervorragend mit dem Unterpulverschweißverfahren verschweißen, wobei ein Manganhartstahlschweißgut erzielt wurde.

**Patentansprüche**

1. Schweißzusatzwerkstoff, Schweißdraht, insbesondere selbstverzehrende Elektrode zum Schweißen, mit einer in sich geschlossenen metallischen Umhüllung (5) aus Stahl, Eisen, Kobalt und/oder Nickel und mit einem Kern (4), welcher ein metallisches pulver einer chemischen Zusammensetzung aufweist, dadurch gekennzeichnet, daß der Kern (4), welcher von der metallischen Umhüllung (5) umgeben ist, mit einem gasverdüsten Pulver aus metallischen Partikelchen aufgebaut ist, die im wesentlichen sphärische und/oder späroide Gestalt aufweisen, deren Korngröße zwischen 3 μm und 300 μm beträgt und der Kern eine Dichte aufweist, welche 85 bis 95% des spezifischen Gewichtes der Legierung des Pulvers beträgt.

2. Schweißzusatzwerkstoff nach Anspruch 1, dadurch gekennzeichnet, daß das Pulver des Kernes (4) aus einer Eisen-, Nickel oder Kobalt-Basis-Legierung besteht.

3. Schweißzusatzwerkstoff nach einem der Ansprüche 1, 2, dadurch gekennzeichnet, daß das Pulver inertgasverdüstet ist.

4. Schweißzusatzwerkstoff nach einem der Ansprüche 1 bis 3, dadurch gekennzeichnet, daß die größte Quererstreckung bei kreisrundem Querschnitt der Durchmesser des Kernes (4) das 5-bis 10 fache der Wandstärke der Umhüllung (5) beträgt.

5. Schweißzusatzwerkstoff nach einem der Ansprüche 1 bis 4, dadurch gekennzeichnet, daß die Umhüllung verkupfert ist.

6. Verfahren zur Herstellung eines Schweißzusatzwerkstoffes nach einem der Ansprüche 1, 2, wobei ein, insbesondere auf einer Haspel (1) aufgewickeltes Rohr (5), vorzugsweise unter Rütteln der Haspel, mit einem Pulver gefüllt wird, worauf das Rohr mit Pulver durch Ziehen im Querschnitt reduziert wird, dadurch gekennzeichnet, daß das Rohr mit einem gasverdüsten, im wesentlichen sphärische und/oder sphäroide Gestalt aufweisenden Metallpulver mit einem Korndurchmesser von 3 μm bis 300 μm gefüllt wird, und durch Ziehen in Ziehvorrichtungen (2, 3) im Querschnitt reduziert und der Kern (4) auf mindestens 85 bis 95% des spezifischen Gewichtes der Legierung des Metallpulvers verdichtet wird.

7. Verfahren nach Anspruch 6, dadurch gekennzeichnet, daß nach dem Ziehen die Außenfläche des Rohres verkupfert, insbesondere elektrolytisch verkupfert, wird.

**Revendications**

1. Matériau de soudage, fil à souder, en particulier une électrode de soudage autoconsommable avec une enveloppe métallique (5) en acier, fer, cobalt et/ou nickel, fermée en soi, et avec un noyau (4) présentant une poudre métallique d'une composition chimique, caractérisé en ce que le noyau (4) entouré de l'enveloppe métallique (5) est composé d'une poudre pulvérisée au gaz de petites particules métalliques présentant essentiellement une forme sphérique et/ou sphéroïde, dont la grosseur du grains se situe entre 3 μm et 300 μm et que le noyau présente une densité comprise entre 85 et 95% du poids spécifique de l'alliage de la poudre.

2. Matériau de soudage suivant la revendication 1, caractérisé en ce que la poudre du noyau (4) consiste en un alliage à base de fer, de nickel ou de cobalt.

3. Matériau de soudage suivant l'une des revendications 1, 2, caractérisé en ce que la poudre est pulvérisée à l'aide d'un gaz inerte.

4. Matériau de soudage suivant l'une des revendications 1 à 3, caractérisé en ce que l'extension transversale maximale, pour une section circulaire du diamètre du noyau (4), est de 5 à 10 fois l'épaisseur de paroi de l'enveloppe.

5. Matériau de soudage suivant l'une des revendications 1 à 4, caractérisé en ce que l'enveloppe est cuivrée.

6. Procédé de fabrication d'un matériau de soudage suivant l'une des revendications 1, 2, dans lequel un tube (5), en particulier enroulé sur une bobine (1), est rempli de poudre, de préférence en secouant la bobine, après quoi le tube rempli de poudre est réduit en section par étirage, caractérisé en ce que le tube est rempli de poudre métallique pulvérisée au gaz, présentant essentiellement une forme sphérique et/ou sphéroïde, à diamètre des grains de 3 μm à 300 μm et réduit en section par étirage dans des dispositifs d'étirage (2, 3) et que le noyau (4) est comprimé à au moins 85 à 95% du poids spécifique de l'alliage de la poudre métallique.

7. Procédé de fabrication suivant la revendication 6, caractérisé en ce que, après l'étirage, la surface extérieure du tube est cuivrée, en particulier cuivrée électrolytiquement.

**Claims**

1. Weld filler material, welding rod, in particular consumable electrode for welding, with an enclosed metallic sheath (5) of steel, iron, cobalt and/or nickel and with a core (4) which has a metallic powder of a chemical composition, characterised in that the core (4), which is surrounded by the metallic sheath (5), is constructed of a gas-atomised powder of metallic particles which have a substantially spherical and/or spheroid shape, the grain size of which is between 3 μm and 300 μm, and the core has a density which is 85 to 95% of the specific weight of the alloy of the powder.

2. Weld filler material according to Claim 1, characterised in that the powder of the core (4) consists of an iron-based, nickel or cobalt-based alloy.

3. Weld filler material according to one of Claims 1, 2, characterised in that the powder is inert gas-atomised.

4. Weld filler material according to one of Claims 1 to 3, characterised in that the maximum transverse extent in the case of the circular cross-section of the diameter of the core (4) is 5 to 10 times the wall thickness of the sheath (5).

5. Weld filler material according to one of Claims 1 to 4, characterised in that the sheath is copper-plated.

6. Process for producing a weld filler material according to one of Claims 1, 2, whereby a tube (5), in particular one wound on to a reel (1), preferably with vibration of the reel, is filled with a powder, whereupon the tube with powder is reduced in cross-section by drawing, characterised in that the tube is filled with a gas-atomised metal powder having a substantially spherical and/or spheroid shape and with a grain diameter of 3 μm to 300 μm, and is reduced in cross-section by drawing in drawing devices (2, 3), and the core (4) is compressed to at least 85 to 95% of the specific weight of the alloy of the metal powder.

7. Process according to Claim 6, characterised in that the outer surface of the tube is copper-plated, preferably electrolytically copper-plated, after drawing.

Fig. 1

Fig.2

Fig.3